# EUROPÄISCHE PATENTSCHRIFT

(11) **EP 1 769 163 B1**
(45) Veröffentlichungstag und Bekanntmachung des Hinweises auf die Patenterteilung: **07.05.2008**
(21) Anmeldenummer: 05758057.3
(22) Anmeldetag: 14.06.2005
(51) Int. Cl.: F16B 37/00

(54) **MUTTER FÜR HOCHBELASTETE SCHRAUBEN UND BOLZEN**
NUT FOR HIGHLY STRESSED SCREWS AND BOLTS
ECROU DESTINE A DES VIS ET BOULONS SOUMIS A DE FORTES CONTRAINTES

(30) Priorität: 30.06.2004 DE 102004031964
(43) Veröffentlichungstag der Anmeldung: 04.04.2007
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen & Partner
(86) Internationale Anmeldenummer: PCT/EP2005/006353
(87) Internationale Veröffentlichungsnummer: WO 2006/002753

(56) Entgegenhaltungen:
- DE-A1- 2 555 012
- DE-A1- 19 638 901
- US-A- 5 681 135

## Beschreibung

Die Erfindung betrifft eine Mutter für hochbelastete Schrauben und Bolzen.

Muttern in Verbindung mit Schrauben und Bolzen sind innerhalb der industriellen Verbindungstechnik die am meisten eingesetzten Verschraubungselemente.

Auf Grund der großen Verbreitung dieser Verbindungselemente werden sie in sehr hohen Stückzahlen hergestellt. Das Gleiche gilt für in Verbindung mit Muttern und Schrauben verwendete Unterlegscheiben, die eingesetzt werden, wenn die sich einstellende Flächenpressung auf Grund der erforderlichen Vorspannkraft zu hoch wird. Norm-Unterlegscheiben haben einen Außendurchmesser, der dem Eckmaß einer Norm-Mutter entspricht. Hierdurch ergibt sich eine größere tragende Fläche als bei dem Einsatz von lediglich einer Sechskantmutter, deren Anflächungen in einem Kreis mit dem Durchmesser des Eckmaßes einbeschrieben sind.

Sowohl die handelsüblich hergestellten Muttern als auch die damit verwendeten Unterlegscheiben werden mit verhältnismäßig großen Toleranzen hinsichtlich des Winkels der Auflagefläche der Mutter zur Gewindeachse und hinsichtlich der Parallelität der Auflageflächen der Unterlegscheiben hergestellt.

Hierdurch kommt es beim Einsatz derartiger Muttern und Unterlegscheiben zu ungenauen Verschraubungsergebnissen und erhöhten Setzverlusten beim Verspannen, insbesondere beim hydraulischen Anziehen.

Des Weiteren tritt bei handelsüblichen Muttern die höchste Belastung am ersten tragenden Gewindegang der Mutter auf, da keine Maßnahmen getroffen sind, die Kraftübertragung auf mehrere Gewindegänge zu verteilen.

Zwar sind so genannte Zugmuttern oder Stulpmuttern sowie Kapselmuttern mit oder ohne kegelig abgedrehten, unteren Gewindegängen bekannt, mit denen die Kraftübertragung beim Anziehen der Mutter auf mehrere Gewindegänge verteilt wird und dadurch eine erhöhte Dauerfestigkeit derartiger Schraubenverbindungen gegeben ist, jedoch handelt es sich hierbei um kostspielige Sonderausführungen, die einen relativ großen Bauraum erfordern und aufwendig in der Herstellung sind.

In der DE 25 55 012 A1 ist eine Schraubenmutter mit einem etwa zylindrischen Grundkörper und einer zum Eingriff für einen Schraubenschlüssel geeigneten Oberfläche sowie mit einer Gewindebohrung für einen Schraubenbolzen beschrieben, die mehrere in Umfangsrichtung im Abstand voneinander angeordnete und sich in axialer Richtung vom Eintrittsende für den Schraubenbolzen aus erstreckende Rillen in den Gewindegängen aufweist. Diese Rillen sollen dazu dienen, eine verhältnismäßig gleichförmige Lastverteilung auf mehrere Gewindegänge zu erreichen, indem die vier ersten Gewindegänge durch die axial verlaufenden Rillen im Bereich der Eintrittsöffnung unterbrochen werden. Der erforderliche Bauraum für die Mutter in Verbindung mit einer Unterlegscheibe liegt erheblich über der Höhe einer Norm-Sechskantmutter zusammen mit der Höhe einer Norm-Unterlegscheibe für das entsprechende Gewinde.

Ausgehend von diesen Problemen liegt der Erfindung die Aufgabe zu Grunde, eine Mutter für hochbelastete Schrauben zu schaffen, die eine Norm-Sechskantmutter in Verbindung mit einer Norm-Unterlegscheibe ersetzt, keinen größeren Bauraum aufweist, aber eine größere tragende Fläche als eine Norm-Sechskantmutter aufweist, steifer als eine Norm-Sechskantmutter ist, geringere Setzverluste beim Anziehen nach sich zieht und sich auf Grund der Verteilung der Kraftübertragung auf mehrere Gewindegänge höher belasten lässt, aber dennoch einfach und kostengünstig herzustellen ist.

Ausgehend von dieser Aufgabenstellung wird eine Mutter für hochbelastete Schrauben und Bolzen vorgeschlagen, die erfindungsgemäß einen zylindrischen Bereich mit einem Durchmesser etwa gleich dem Eckmaß einer Norm-Sechskantmutter für den jeweiligen Gewindedurchmesser, eine Gesamthöhe (H) etwa entsprechend der Höhe einer Norm-Sechskantmutter für den jeweiligen Gewindedurchmesser zuzüglich der Dicke einer entsprechenden Norm-Unterlegscheibe, eine Auflagefläche, die durch Bearbeitung des Gewindes und dieser Auflagefläche in einer Aufspannung praktisch genau senkrecht zur Gewindeachse verläuft und eine Ausbildung des Gewindes zur Verteilung der Kraftübertragung auf mehrere Gewindegänge, ausgehend von der Auflagefläche in der Weise, dass das Mutterngewinde mit einem Abstand von mindestens einem Gewindegang von der Auflagefläche freigedreht ist und mehrere der zur Auflagefläche gerichteten Gewindegänge des Mutterngewindes kegelig ausgedreht sind, sowie eine am der Auflagefläche abgewandten Ende des zylindrischen Bereichs angeordnete Ausbildung zum formschlüssigen Eingriff eines Mutterndrehwerkzeugs umfasst, wobei die Höhe der Ausbildung nicht mehr als ein Drittel der Gesamthöhe (H) der Mutter beträgt.

"Auf Grund des zylindrischen Bereichs mit einem Durchmesser etwa gleich dem Eckmaß einer Norm-Sechskantmutter für den jeweiligen Gewindedurchmesser erfordert die erfindungsgemäße Mutter nicht mehr Bauraum als eine Norm-Sechskantmutter, weist jedoch eine größere Auflagefläche auf, wodurch die Flächenpressung zum Grundmaterial herabgesetzt wird. Des Weiteren ist die Mutter in sich steifer als eine gleich große Norm-Sechskantmutter, wodurch beim Verspannen ein geringerer Setzverlust erzielt wird.

Ferner ist aus den vorgenannten Gründen eine zusätzliche Unterlegscheibe nicht mehr erforderlich, so dass die Toleranzen der Unterlegscheibe beim Verspannen nicht mehr in das Verschraubungsergebnis eingehen.

Sehr wesentlich ist auch das mit der Bearbeitung der Auflagefläche und des Gewindes in einer Aufspannung erzielte Ergebnis einer praktisch genau senkrecht zur Gewindeachse verlaufenden Auflagefläche, die zu einer gleichmäßigen Belastung der Gewindegänge beim Anziehen führt. Auch hierdurch wird eine Verringerung der Setzverlusterscheinung beim Anziehen erreicht.

Die Verteilung der Kraftübertragung auf mehrere Gewindegänge, ausgehend von der Auflagefläche erfolgt dadurch, dass das Mutterngewinde, von der Auflagefläche ausgehend mit einem Abstand von mindestens einem Gewindegang frei gedreht ist und dass einige zur Auflagefläche gerichtete Gewindegänge des Mutterngewindes, ausgehend von der Auflagefläche, sich kegelig verjüngend ausgedreht sind.

Da die Gesamthöhe der erfindungsgemäßen Mutter etwa der Höhe einer Norm-Sechskantmutter für den jeweiligen Gewindedurchmesser zuzüglich der Dicke einer entsprechenden Norm-Unterlegscheibe entspricht, ist der Bauraum der erfindungsgemäßen Mutter insgesamt nicht größer als der einer Norm-Sechskantmutter in Verbindung mit einer Norm-Unterlegscheibe, jedoch lässt sich die erfindungsgemäße Mutter erheblich höher für das Spannen hochbelasteter Schrauben und Bolzen belasten, da eine Verteilung der Belastung auf eine größere Anzahl Gewindegänge erfolgt und die Mutter auf Grund des zylindrischen Bereichs eine erheblich höhere Steifigkeit als eine gleichgroße Norm-Sechskantmutter aufweist.

Die erfindungsgemäße Mutter lässt sich erfindungsgemäß und bevorzugterweise zum Anziehen hochbelasteter Schrauben mittels eines hydraulischen Schraubenspannzylinders verwendet. Ein derartiger hydraulischer Schraubenspannzylinder ist in der DE 196 38 901 A1 derselben Anmelder beschrieben. Auf Grund der Ausführung im oberen Bereich der Mutter als Sechskant oder Vielzahn ist auch der Anzug mit handelsüblichen Hand- oder Hydraulikschraubern möglich.

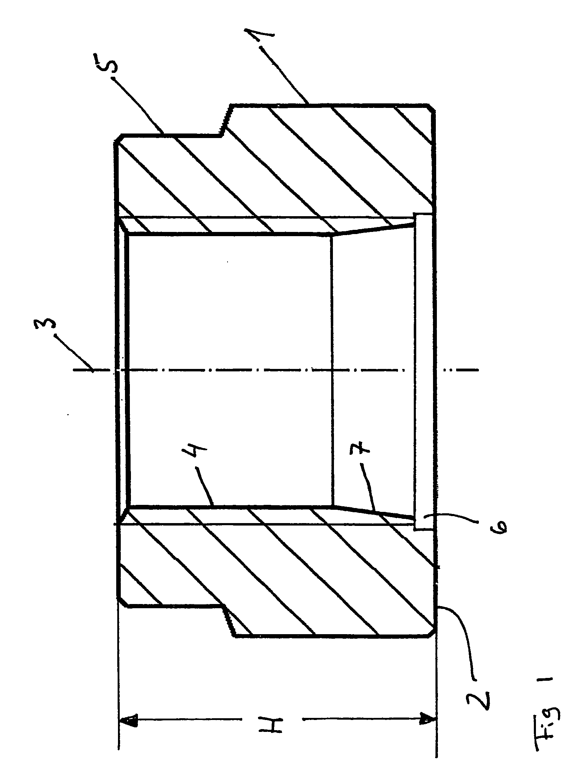

Die Erfindung wird nachstehend anhand einer in der Zeichnung dargestellten Schnittansicht der erfindungsgemäßen Mutter beispielhaft beschrieben.

Die erfindungsgemäße Mutter besteht aus einem zylindrischen Bereich 1, dessen Außendurchmesser dem Eckmaß einer Norm-Sechskantmutter für denselben Gewindedurchmesser entspricht.

Die Mutter ist mit einer Auflagefläche 2 versehen, die möglichst genau senkrecht zur Achse 3 der Mutter ihres Innengewindes 4 verläuft. Dieser genau senkrechte Verlauf der Auflagefläche 2 mit Bezug auf die Achse 3 wird dadurch erzielt, dass die Bearbeitung des Mutterngewindes 4 und der Auflagefläche 2 jeweils in einer Aufspannung erfolgen.

Am der Auflagefläche 2 abgewandten Ende des zylindrischen Bereichs 1 befinden sich Ausbildungen 5 zum formschlüssigen Eingriff eines Mutterndrehwerkzeugs. Diese Ausbildungen 5 können aus normgerechten Anflächungen eines Sechskants oder auch nur aus zwei parallelen Anflächungen bestehen, die zum formschlüssigen Eingriff eines Schraubenschlüssels dienen. Ebenso ist möglich, in die Oberseite achsparallele oder in die Umfangsfläche der Mutter radial gerichtete Bohrungen anzubringen, die für den Eingriff eines Zapfenschlüssels geeignet sind. Andere, übliche Ausbildungen beispielsweise in Form einer Vielzahnausbildung sind ebenfalls möglich und geeignet.

Zur Verteilung der Kraftübertragung auf mehrere Gewindegänge des Mutterngewindes 4 kann das Mutterngewinde 4, benachbart zur Auflagefläche 2, mit einer Ausdrehung 6 versehen sein, deren axiale Höhe mindestens etwa einem Gewindegang entspricht. Des Weiteren ist es möglich, eine Verteilung der Kraftübertragung auf mehrere Gewindegänge durch eine kegelige Ausdrehung 7 der zur Auflagefläche 2 hin gerichteten Gewindegänge zu erreichen.

Im dargestellten Ausführungsbeispiel sind die Ausdrehung 6 und die kegelige Ausdrehung 7 miteinander kombiniert.

## Patentansprüche

1. Mutter für hochbelastete Schrauben und Bolzen mit einem zylindrischen Bereich (1) mit einem Durchmesser etwa gleich dem Eckmaß einer Norm-Sechskantmutter für den jeweiligen Gewindedurchmesser, einer Gesamthöhe (H) etwa entsprechend der Höhe einer Norm-Sechskantmutter für den jeweiligen Gewindedurchmesser zuzüglich der Dicke einer Norm-Unterlegscheibe mit einer Auflagefläche (2), die durch Bearbeitung des Gewindes (4) und dieser Auflagefläche (2) in einer Aufspannung praktisch genau senkrecht zur Gewindeachse (3) verläuft und mit einer Ausbildung des Gewindes (4) zur Verteilung der Kraftübertragung auf mehrere Gewindegänge, ausgehend von der Auflagefläche (2) in der Weise, dass das Muttergewinde (4) mit einem Abstand von mindestens einem Gewindegang von der Auflagefläche (2) freigedreht (6) ist und mehrere der zur Auflagefläche (4) gerichteten Gewindegänge des Mutterngewindes (4) kegelig (7) ausgedreht sind, sowie mit einer am der Auflagefläche (2) abgewandten Ende des zylindrischen Bereichs (1) angeordneten Ausbildung (5) zum formschlüssigen Eingriff eines Mutterndrehwerkzeugs, wobei die Höhe der Ausbildung (5) nicht mehr als ein Drittel der Gesamthöhe (H) der Mutter beträgt.

## Claims

1. Nut for highly stressed screws and bolts, comprising a cylindrical region (1) with a diameter that is approximately equal to the corner-to-corner dimension of a standard hexagon nut for the respective thread diameter, a total height (H) that is approximately the same as the height of a standard hexagon nut for the respective thread diameter minus the thickness of a standard washer, with a bearing surface (2) which, by machining the thread (4) and this bearing surface (2) in one setting, runs practically exactly perpendicular to the thread axis (3), and with a design of the thread (4) for distributing the transfer of force to a plurality of thread turns, starting from the bearing surface (2), in such a way that the nut thread (4) is turned free (6) at a distance of at least one thread turn from the bearing surface (2) and a number of the thread turns of the nut thread (4) directed towards the bearing surface (4) are re-bored in a conical manner (7), and with a structure (5) for the form-fitting engagement of a nut turning tool, said structure being arranged at the end of the cylindrical region (1) remote from the bearing surface (2), wherein the height of the structure (5) is no more than one-third of the total height (H) of the nut.

## Revendications

1. Ecrou destiné à des vis et boulons soumis à de fortes contraintes, présentant une zone cylindrique (1) dont le diamètre correspond environ au surangle d'un écrou hexagonal normalisé pour le diamètre de filetage correspondant, une hauteur totale (H) correspondant approximativement à la hauteur d'un écrou hexagonal normalisé pour le diamètre de filetage correspondant à laquelle s'ajoute l'épaisseur d'une rondelle normalisée, une surface d'appui (2) s'étendant quasiment perpendiculairement à l'axe de filetage (3) par usinage du filetage (4) et de la surface d'appui (2) au cours du même bridage, le filetage (4) étant conçu de manière à répartir la transmission de la force sur plusieurs pas, à partir de la surface d'appui (2), de telle sorte que le filetage (4) de l'écrou se trouve à un écartement (6) d'au moins un pas de la surface d'appui (2) et que plusieurs des pas du filetage d'écrou (4) orientés vers la surface d'appui (2) soient alésés de façon conique (7), l'écrou présentant également, à l'extrémité de la zone cylindrique (1) orientée à l'opposé de la surface d'appui (2), une structure (5) destinée à la prise par complémentarité de forme d'un outil tourne-écrou, la hauteur de la structure (5) ne représentant pas plus d'un tiers de la hauteur totale (H) de l'écrou.
